## Europäisches Patentamt
## European Patent Office
## Office européen des brevets

(11) Numéro de publication: **0 218 620**
**B1**

(12) ## FASCICULE DE BREVET EUROPÉEN

(45) Date de publication du fascicule du brevet:
**31.05.89**

(51) Int. Cl.⁴: **B 60 S 1/24**

(21) Numéro de dépôt: **86901909.1**

(22) Date de dépôt: **26.03.86**

(86) Numéro de dépôt international:
**PCT/FR 86/00103**

(87) Numéro de publication internationale:
**WO 86/05751 (09.10.86 Gazette 86/22)**

(54) **MECANISME DE TRANSMISSION, NOTAMMENT POUR ESSUIE-GLACE, ET DISPOSITIF D'ESSUIE-GLACE EQUIPE D'UN TEL MECANISME.**

(30) Priorité: **01.04.85 FR 8504912**

(43) Date de publication de la demande:
**22.04.87 Bulletin 87/17**

(45) Mention de la délivrance du brevet:
**31.05.89 Bulletin 89/22**

(84) Etats contractants désignés:
**DE IT**

(56) Documents cité:
**DE-A-3 230 695**
**GB-A-2 090 729**

(73) Titulaire: **EQUIPEMENTS AUTOMOBILES MARCHAL, 21- 27 boulevard Gambetta, F-92130 Issy les Moulineaux (FR)**

(72) Inventeur: **EUSTACHE, Jean- Pierre, 5, rue Albert Camus, F-92160 Antony (FR)**
Inventeur: **MAUBRAY, Daniel, 16, boulevard Rodin, F-92130 Issy- les- Moulineaux (FR)**

(74) Mandataire: **Peuscet, Jacques, Cabinet Peuscet 68, rue d'Hauteville, F-75010 Paris (FR)**

LIBER, STOCKHOLM 1989

## Description

L'invention est relative à un mécanisme de transmission, notamment pour essuie-glace, entre un arbre rotatif d'entraînement, fixe par rapport à un bâti, et une bielle, ou analogue, pour la commande d'un mouvement d'oscillation alternatif, le sens de rotation de l'arbre rotatif pouvant être inversé, ce mécanisme de transmission comprenant:

- une manivelle de longueur efficace variable, cette longueur ayant une première valeur, en fonctionnement normal, pour un sens de rotation donné de l'arbre, tandis qu'une augmentation de la longueur efficace de la manivelle est commandée, lors d'un arrêt de fonctionnement, par une inversion du sens de rotation de l'arbre;
- un excentrique, calé en rotation sur l'arbre d'entraînement, lesit excentrique étant monté dans un alésage prévu dans la manivelle;
- des moyens de blocage en rotation entre l'excentrique et la manivelle, prévus à la périphérie de l'excentrique, pour assurer une liaison en rotation entre l'excentrique et la manivelle dans le sens de rotation normal de l'arbre, et pour libérer en rotation l'excentriqe par rapport à la manivelle dans le sens opposé de rotation de l'arbre;
- et des moyens pour bloquer en rotation la manivelle par rapport au bâti lorsque l'arbre tourne en sens inverse du sens normal, ainsi qu'au début de la rotation de l'arbre dans le sens normal, tandis que la manivelle est libre de tourner par rapport au bâti pendant la suite du fonctionnement dans le sens normal.

Un mécanisme de transmission de ce genre est connu, par exemple d'après les figures 1 à 4 de GB-A-2 090 729 (correspondant à FR-A-2 497 743).

Un tel art antérieur, comme expliqué dans GB-A-2 090 729, page 1, lignes 108 - 117, fait intervenir un verrou coulissant, de sorte que le fonctionnement du mécanisme demande à être amélioré au point de vue sûreté et stabilité. En outre, sa construction demande à être simplifiée.

L'invention a pour but, surtout, de fournir un mécanisme de transmission du genre défini précédemment qui ne présente plus, ou à un degré moindre, les inconvénients rappelés cidessus. Autrement dit, on souhaite que le mécanisme soit d'un fonctionnement plus sûr et plus précis et d'une construction relativement simple. Il est souhaitable, en outre, que la conception du mécanisme conduise à un fonctionnement plus silencieux.

Selon l'invention, un mécanisme de transmission, notamment pour essuie-glace, du genre défini précédemment est caractérisé par le fait que les moyens pour bloquer en rotation la manivelle par rapport au bâti comprennent:

- un manchon ou analogue, fixé sur le bâti et centré sur l'arbre, ce manchon comportant un logement central;

- au moins une douille traversée librement en rotation par l'arbre et montée dans le logement central du manchon, cette douille étant liée en rotation à la manivelle, et un mouvement de translation entre la manivelle et la douille étant autorisé,
- et des moyens pour bloquer en rotation la douille par rapport au manchon lors de l'inversion du sens de rotation de l'arbre, comprenant un dispositif de roue libre, ou équivalent (roue à rochets), placée entre le manchon et la douille de telle sorte que, pour le sens normal de rotation, la douille soit libre par rapport au manchon, tandis que pour le sens inverse, la roue libre est bloquante et assure une liaison en rotation du manchon et de la douille.

Avantageusement, la douille présente une extension radiale, à son extrémité voisine de la manivelle, cette extension étant située, suivant la direction axiale, entre la manivelle et le manchon, la liaison en rotation de la manivelle et de la douille étant assurée par un pion, ou analogue, solidaire de la manivelle et orienté sensiblement orthogonalement au plan moyen de cette manivelle, ce pion faisant saillie en direction du manchon et traversant une lumière radiale prévue dans ladite extension.

Les moyens pour bloquer en rotation la douille par rapport au manchon peuvent comprendre un doigt orienté sensiblement radialement, porté par le manchon et poussé élastiquement, radialement vers l'intérieur, contre la surface cylindrique de la douille qui comporte une encoche destinée à recevoir l'extrémité du doigt.

Une bague, montée autour de l'arbre, peut être disposée axialement contre la douille et être liée à cette dernière avec une possibilité de débattement angulaire, ladite bague comportant une deuxième encoche qui peut être alignée ou décalée angulairement par rapport à celle de la douille, le susdit doigt ayant une épaisseur, suivant la direction de l'arbre, suffisante pour coopérer avec les surfaces de la douille et de la bague de sorte que le doigt ne puisse arrêter en rotation la douille par rapport au manchon, que lorsque les encoches de la douille et de la bague sont alignées.

La liaison en rotation, avec possibilité de débattement angulaire, entre la douille et la bague peut être assurée par un pion destiné à coopérer avec une lumière ou analogue en forme d'arc de cercle.

L'invention est également relative à un dispositif d'essuie-glace comprenant un mécanisme de transmission tel que défini précédemment.

L'invention consiste, mises à part les dispositions exposées cidessus, en certaines autres dispositions dont il sera plus explicitement question ci-après à propos de modes de réalisation particuliers décrits avec référence aux dessins ci-annexés, mais qui ne sont nullement limiatifs.

La figure 1, de ces dessins, est un schéma illustrant le balayage assuré par un essuie-glace, avec mise en position de "parcage".

La figure 2 est une coupe axiale d'un premier mode de réalisation d'un mécanisme de transmission conforme à l'invention, la manivelle ayant la longueur efficace correspondant au fonctionnement normal.

La figure 3 est une section suivant la ligne II - III figure 2.

La figure 4 est une section suivant la ligne IV - IV figure 2.

La figure 5 montre, semblablement à la figure 2, le mécanisme de transmission dans une position pour laquelle la longueur efficace de la manivelle est maximale et correspond à la position de "parcage" des essuie-glace.

La figure 6 est une section suivant la ligne VI - VI figure 5.

La figure 7 est une section suivant la ligne VII - VII figure 5.

Les figures 8 à 10 sont des sections, semblables à celles de la figure 6, illustrant respectivement, la mise en position de "parcage", la sortie de la position de "parcage", et l'enclenchement du cycle normal.

La figure 11 est une coupe axiale d'un second mode de réalisation d'un mécanisme de transmission selon l'invention en position normale.

La figure 12 est une section suivant la ligne XII - XII figure 11.

La figure 13 est une section suivant la ligne XIII - XIII figure 11.

La figure 14 est une section suivant la ligne XIV - XIV figure 11.

La figure 15 montre, en coupe axiale, le mécanisme de la figure 11 en position de "parcage".

La figure 16 est une section suivant la ligne XVI - XVI figure 15.

La figure 17 est une section suivant la ligne XVII - XVII figure 15.

La figure 18, enfin, est une section suivant la ligne XVIII - XVIII figure 15.

La description qui suit concerne l'application de mécanismes de transmission selon l'invention à des dispositifs d'essuie-glace.

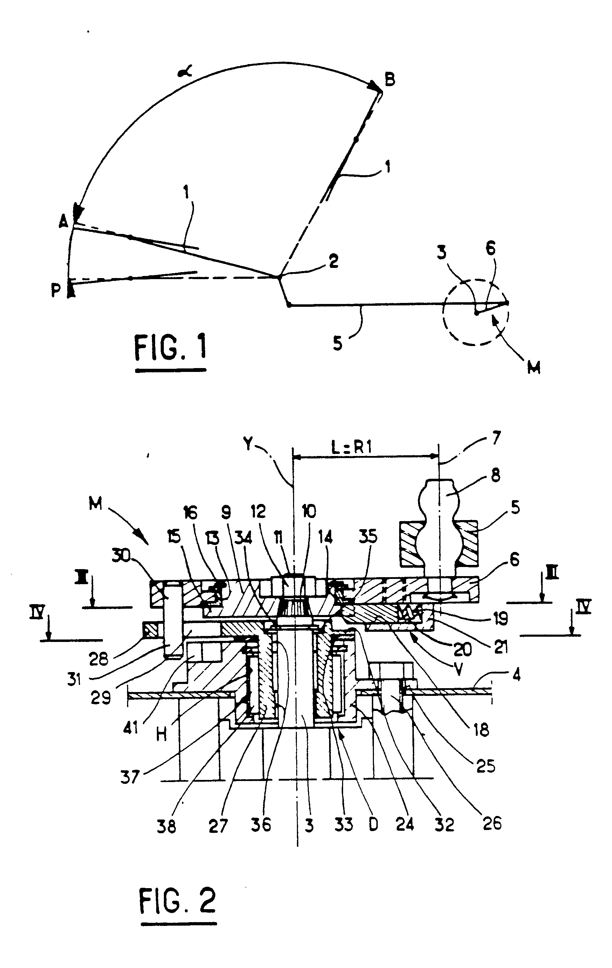

La figure 1 illustre le balayage assuré par un bras d'essuie-glace 1 qui tourne autour d'un axe 2. Le cycle normal de balayage s'effectue entre les deux positions angulaires extrêmes A et B formant entre elles un angle α. Ce cycle de balayage est obtenu pour une rotation dans un sens déterminé ou sens normal d'un arbre 3 (figure 2) d'entraînement.

Lorsque l'arrêt du balayage est commandé, le bras vient se placer dans la position A, l'arbre d'entraînement 3 s'arrête; le sens de rotation de l'arbre 3 est alors inversé et le bras 1 passe dans une position escamotée ou position de "parcage" figurée P sur la figure 1. Lorsque le bras a atteint cette position P, le moteur d'entraînement de l'arbre 3 est arrêté. Dans la position de "parcage" P le bras et l'essuie-glace attaché à ce bras, ne sont généralement plus visibles sur le pare-brise ou autre surface à essuyer, et sont situés, par exemple, au-dessous du prolongement de la surface de la carrosserie.

Un mécanisme de transmission M est prévu entre l'arbre rotatif 3, qui est fixe par rapport à un bâti 4 et une bielle 5, ou analogue (figures 1 et 2) pour la commande du ou des bras d'essuie-glace tels que 1.

Le mécanisme M comprend une manivelle 6 dont la longueur efficace L est variable. Par longueur efficace L on désigne la distance entre l'axe géométrique Y de l'arbre 3 et l'axe géométrique 7 d'un maneton 8 fixé vers une extrémité de la manivelle 6, pour l'articulation de la bielle 5.

La longueur L a une première valeur R1 (figure 2) en fonctionnement normal (cycle normal de balayage) pour un sens de rotation donné de l'arbre 3 (sens de rotation contraire de celui des aiguilles d'une montre selon la représentation des dessins).

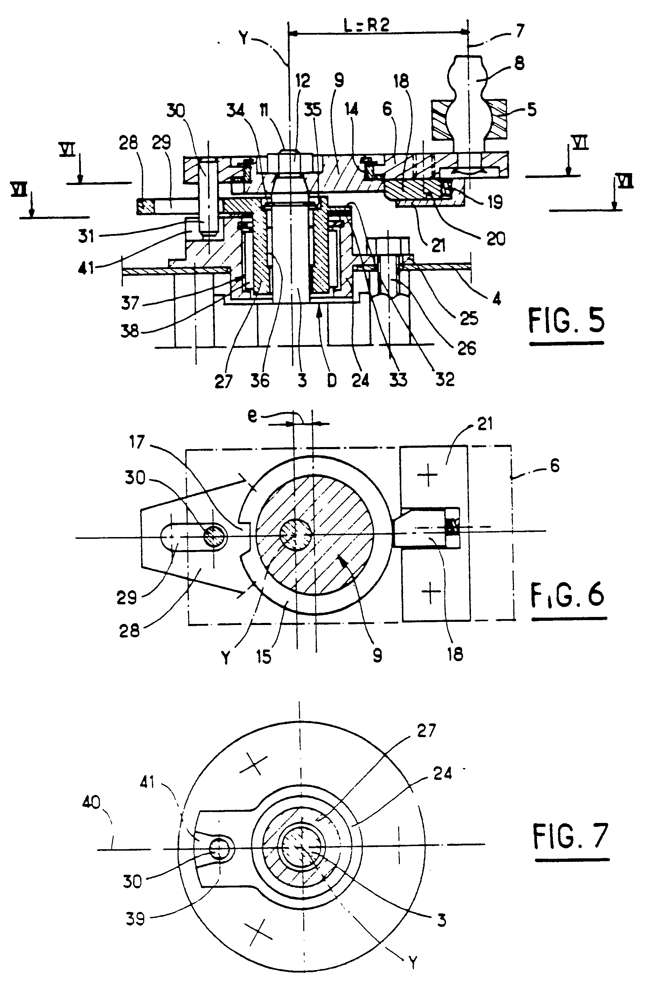

Après l'arrêt de l'arbre 3 dans une position angulaire correspondant à la position A (figure 1) du bras d'essuie-glace 1, le sens de rotation de l'arbre 3 est inversé. Le mécanisme M provoque une augmentation de la longueur efficace L de la manivelle qui prend alors la valeur R2, représentée sur la figure 5. Cette augmentation de longueur efficace de la manivelle 6, dont la position angulaire n'est pas modifiée, provoque le passage du balai 1 dans la position de "parcage" P.

Le mécanisme M comprend un excentrique 9 calé en rotation sur l'arbre d'entraînement 3. Cet excentrique 9 est constitué par un disque dont le centre est déporté d'une distance e par rapport à l'axe Y. La distance e est inférieure au rayon du disque 9.

Le blocage du disque 9 sur l'arbre 3 peut être obtenu à l'aide d'une portée tronconique cannelée 10 prévue à l'extrémité de l'arbre 3, propre à coopérer avec une porté conjuguée prévue dans un trou de l'excentrique 9 pour le passage de l'extrémité 11 de plus petit diamètre de l'arbre 3. Cet extrémité 11 est filetée de telle sorte qu'un écrou 12 puisse être vissé sur ladite extrémité 11 pour bloquer axialement l'excentrique 9 contre la portée 10.

L'excentrique 9 est monté dans un alésage 13 prévu dans la manivelle 6. L'alésage circulaire 13 a son centre confondu avec celui de l'excentrique 9. Une bague anti-friction 14 peut être prévue entre la surface cylindrique de l'excentrique 9 et la surface limitant l'alésage 13. Le maintien suivant la direction axiale de la manivelle 6 par rapport à l'excentrique 9 peut être assuré, d'un côté, par un épaulement radial 15 de l'excentrique s'étendant contre la face transversale de la manivelle 6, au-delà du contour de l'alésage 13, et, d'autre part, par une bague fendue d'arrêt 16, ancrée dans une gorge de l'excentrique. La section transversale de la bague anti-friction 14 peut avoir une forme en L dont une branche s'étend contre l'épaulement 15, comme visible sur la figure 2.

Des moyens V de blocage en rotation de l'excentrique 9 par rapport à la manivelle 6 sont prévus, à la périphérie de l'excentrique 9 pour assurer une liaison en rotation entre l'excentrique 9 et la manivelle 6 dans le sens de rotation normal de l'arbre 3, à savoir le sens contraire des aiguilles d'une montre selon la représentation des dessins, et pour libérer en rotation l'excentrique 9 par rapport à la manivelle 6 pour le sens opposé de rotation c'est-à-dire pour le sens des aiguilles d'une montre, selon la représentation des dessins.

Ces moyens V comprennent, du côté de l'excentrique 9, une encoche 17 prévue à la périphérie de l'épaulement 15 et s'ouvrant radialement vers l'extérieur. Du côté de la manivelle 6, les moyens V comprennent une plaquette 18, ou analogue, poussée élastiquement, notamment par un ressort 19, vers l'intérieur dans le sens radial, l'extrémité radiale intérieure de la plaquette 18 ayant une forme conjuguée de celle de l'encoche 17 de manière à pouvoir y pénétrer. Cette plaquette 18 est montée coulissante, contre la face de la manivelle 6 tournée vers le bâti 4, dans un logement 20 déterminé, par exemple, par une pièce 21 fixée contre la manivelle 6. La forme de l'encoche 17, et la forme conjuguée de l'extrémité de la plaquette 18, sont déterminées de sorte que, pour le sens normal de rotation (sens contraire des aiguilles d'une montre dans le cas des dessins) l'effort d'entraînement transmis par l'excentrique 9 à la manivelle 6 n'ait pas tendance à écarter la plaquette 18 radialement, tandis que pour le sens de rotation inverse, l'effort d'entraînement de l'excentrique 9, transmis à la manivelle 6, chasse la plaquette 18 hors de l'encoche 17; l'excentrique 9 est alors libéré en rotation par rapport à la manivelle 6. Pour cela, le bord arrière 22, de l'encoche 17, suivant le sens normal de rotation, est orienté sensiblement parallèlement à la direction du rayon passant par le centre de l'excentrique 9 et le milieu de l'encoche 17, tandis que le bord avant 23 de ladite encoche 17 est incliné par rapport à la direction du susdit rayon de sorte que la largeur de l'encoche augmente progressivement quand on s'éloigne du centre de l'excentrique 9. L'extrémité conjuguée de la plaquette 18 a la forme d'un trapèze rectangle.

Des moyens D sont en outre prévus pour bloquer en rotation la manivelle 6 par rapport au bâti 4 lorsque l'arbre 3 tourne en sens inverse du sens normal (c'est-à-dire, selon les dessins, lorsque l'arbre 3 tourne dans le sens des aiguilles d'une montre) et au début de la rotation en sens normal; les moyens D laissent la manivelle 6 libre de tourner par rapport au bâti 4 pendant la suite du fonctionnement dans le sens normal.

Ces moyens D comprennent un manchon 24 ou analogue, fixé sur le bâti 4 et centré sur l'arbre 3. Ce manchon 24 peut comporter, sur sa périphérie, des oreilles 25 (figure 2) traversées de trous pour le passage de vis de fixation 26 sur le bâti 4. Une douille 27, traversée librement en rotation par l'arbre 3, est montée dans le logement central H du manchon 24, cette douille 27 étant liée en rotation à la manivelle 6.

Selon la réalisation des figures 2 à 10, la liaison en rotation de la manivelle 6 et de la douille 27 est assurée par l'intermédiaire d'une extension radiale 28 prévue à l'extrémité de la douille 27 tournée vers manivelle 6; cette extension 28 comporte une lumière 29 orientée radialement, traversée par un pion 30, ou analogue, solidaire de la manivelle 6.

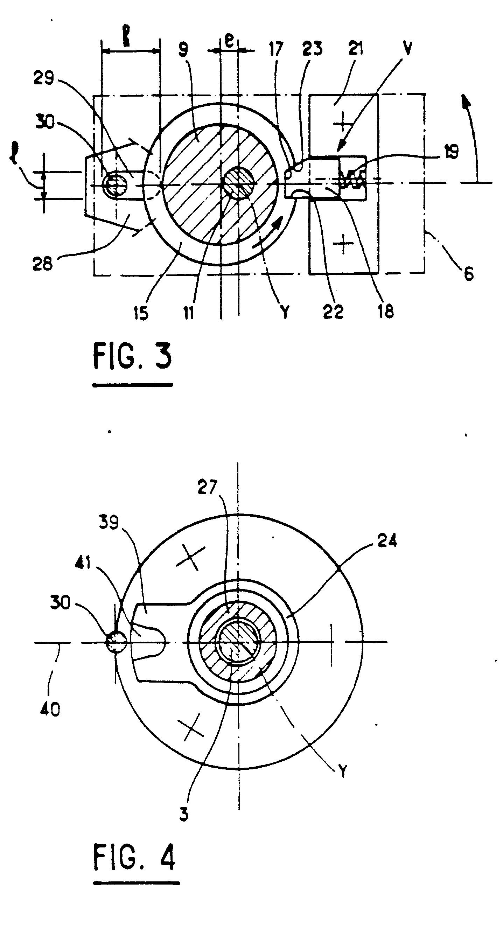

Le pion 30 est orienté orthogonalement au plan moyen de la manivelle 6. La longueur du pion 30 est suffisante pour que son extrémité 31 éloignée de la manivelle 6 fasse saillie au-delà de l'extension 28. Le diamètre du pion 30 est sensiblement égal à la largeur $l$ (figure 3) de la lumière 29 de sorte que la liaison en rotation entre la manivelle 6 et la douille 27 soit réalisée avec un jeu réduit. La dimension radiale $h$ (figure 3) de la lumière 29 est au moins égale à $2e$, et de préférence supérieure à cette valeur, de sorte que la manivelle 6 puisse se déplacer en translation, radialement, par rapport à la douille 27.

A son extrémité tournée vers la manivelle 6, la douille 27 est munie, sur sa partie cylindrique extérieure, d'une collerette 32 en appui axial, par l'intermédiaire d'une rondelle anti-friction 33, contre l'extrémité axiale du manchon 24.

La douille 27 est en outre arrêtée axialement, par rapport à l'arbre 3, par une bague fendue 34 ancrée dans une gorge de l'arbre 3; une rondelle anti-friction 35 est prévue entre la bague 34 et une zone d'appui frontale de la douille 27. La bague fendue 34 s'oppose à un déplacement de la douille 27, parallèlement à l'axe de l'arbre 3, en direction de la manivelle 6. Le montage avec liberté de rotation de l'arbre 3 dans la douille 27 peut s'effectuer à l'aide de coussinets anti-friction 36 disposés entre la surface extérieure de l'arbre 3 et la surface intérieure de la douille 27, parallèlement à l'axe de l'arbre 3.

Selon le mode de réalisation des figures 1 à 10, les moyens D comprennent une roue libre 37 ou une roue à rochet, ou équivalent, disposée entre la surface extérieure de la douille 27 et la surface cylindrique intérieure du manchon 24. Cette roue libre 37 peut être du type à aiguilles ou à rouleaux 38. La roue libre 37 est agencée de telle sorte que pour la rotation de l'arbre 3 dans le sens normal, c'est-à-dire dans le sens contraire des aiguilles d'une montre selon la représentation des dessins, la douille 27 (et donc la manivelle 6) peut tourner librement par rapport au manchon 24; par contre, pour le sens de rotation opposé (sens de rotation des aiguilles d'une montre) la douille 27 est bloquée en rotation par rapport au manchon 24.

Ce manchon 24, comme visible sur la figure 4, comporte une extension radiale 39 dont la ligne moyenne 40 correspond à la position angulaire de la ligne moyenne de la manivelle 6 en position d'arrêt fin de course, avant la mise en position de "parcage". Cette extension 39 comporte un logement 41 s'ouvrant à la périphérie de l'extension 39 et sur la face de cette extension tournée vers la manivelle 6. Le pion 30 comme bien visible sur la figure 4, occupe la même position angulaire que le logement 41 lorsque la manivelle 6 est en position d'arrêt.

Ceci étant, le fonctionnement du mécanisme de transmission conforme au mode de réalisation des figures 2 à 10 est le suivant:

En fonctionnement normal, la manivelle 6 occupe, par rapport à l'excentrique 9, la position représentée sur la figure 2, correspondant à une longueur efficace minimale. La plaquette 18 de verrouillage est engagée dans l'encoche 17 (figure 3) et la rotation de l'arbre 3 dans le sens normal (sens contraire des aiguilles d'une montre) assure l'entraînement en rotation de la manivelle 6. Le système manivelle 6/bielle 5 transforme ce mouvement de rotation continue en un mouvement d'oscillation alternative du bras d'essuie-glace 1 entre les positions A et B de la figure 1.

Lorsque l'utilisateur commande l'arrêt de l'essuie-glace, un dispositif (non montré) assure le maintien de l'alimentation du moteur électrique, qui entraîne l'arbre 3 par un système d'engrenages ou analogue (non représenté) jusqu'à ce que le bras d'essuie-glace 1 atteigne la position d'arrêt A de la figure 1.

Ce mouvement s'est poursuivi avec l'arbre 3 tournant toujours dans le sens normal (sens contraire des aiguilles d'une montre).

Lorsque le bras 1 est arrivé en position A, le moteur entraînant l'arbre 3 est arrêté et, automatiquement, sa rotation en sens inverse est commandée. L'arbre 3 va donc tourner dans le sens inverse du sens normal, c'est-à-dire, selon la représentation des dessins, dans le sens des aiguilles d'une montre.

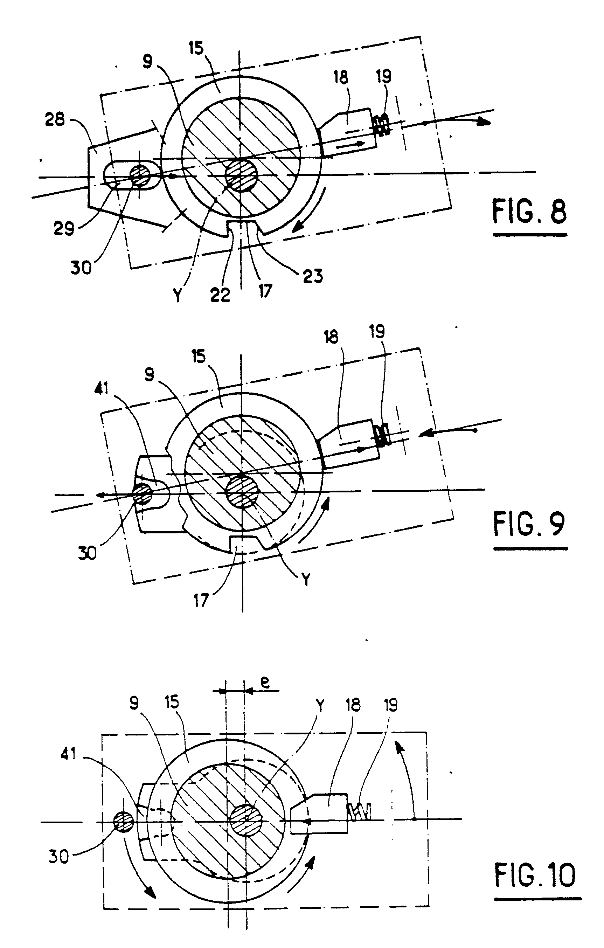

Au moment où le bras 1 arrive dans la position A, le pion 30 se trouve au droit du logement 41 mais est écarté radialement de ce logement comme représenté sur les figures 2 et 4. Ou fait de la rotation de l'arbre 3 dans le sens inverse, la roue libre 37 va devenir bloquante et la douille 27 est immobilisée en rotation par rapport au manchon 24. La manivelle 6 est elle-même immobilisée en rotation du fait de la coopération du pion 30 avec la lumière 29. Par ailleurs, la coopération du bord avant incliné 23 de l'encoche 17 avec le bord incliné correspondant de la plaquette 18 provoque un déplacement de cette plaquette 18 radialement vers l'extérieur à l'encontre du ressort 19; la plaquette 18 sort de l'encoche 17 et l'excentrique 9 est libéré en rotation par rapport à la manivelle 6, comme montré sur la figure 8.

Des moyens interrupteurs (non représentés) sont prévus pour commander l'arrêt de l'entraînement de l'arbre 3 lorsque l'excentrique 9 a décrit un demi-tour à partir de la position angulaire représentée sur la figure 3. Au cours de ce demi-tour, la manivelle 6 dont la position angulaire par rapport au manchon 24 et au bâti 4 ne varie pas, se déplace radialement de la gauche vers la droite selon la représentation de la figure 2, d'une distance 2e.

Le pion 30 pénètre, par un déplacement radial, dans le logement 41. A la fin du demi-tour de l'excentrique 9, la configuration du mécanisme correspond à celle représentée sur la figure 5. La longueur efficace de la manivelle 6 a pris sa valeur maximale.

L'augmentation de la longueur efficace de la manivelle 6 a entraîné le passage du bras d'essuie-glace 1 de la position A à la position de "parcage" P (figure 1).

L'alimentation du moteur électrique (non représenté) entraînant l'arbre 3 est alors coupée.

Lorsque l'utilisateur commande la mise en marche du dispositif d'essuie-glace, le mécanisme de transmission se trouve dans la configuration représentée sur la figure 5.

L'arbre 3 est mis en mouvement dans le sens normal de rotation, c'est-à-dire suivant le sens contraire des aiguilles d'une montre dans l'exemple envisage.

De ce fait, la roue libre 37 n'est plus bloquante et autorise une rotation de la douille 27 par rapport au manchon 24 dans ce sens de rotation. Toutefois, le pion 30, qui est engagé dans le logement 41, empêche l'entraînement en rotation, par les forces de frottement, de la manivelle 6.

L'excentrique 9 va donc tourner, par rapport à la manivelle 6, comme représenté sur la figure 9.

Ce mouvement de rotation relatif de l'excentrique et de la manivelle 6 provoque un mouvenent de translation de cette manivelle 6, par rapport au manchon 24 et au bâti 4 dans un sens tel que le pion 30 s'écarte radialement de l'arbre 3 et sort du logement 41.

Lorsque l'excentrique 9 aura effectué un demi-tour, l'encoche 17 se trouvera au droit de la plaquette 18 qui pénetrera dans cette encoche pour assurer la liaison en rotation de l'excentrique 9 et ce la manivelle 6. La figure 10 représente cette position d'enclenchement qui correspond à la fin de la sortie de la position de "parcage" et au début du cycle normal de balayage.

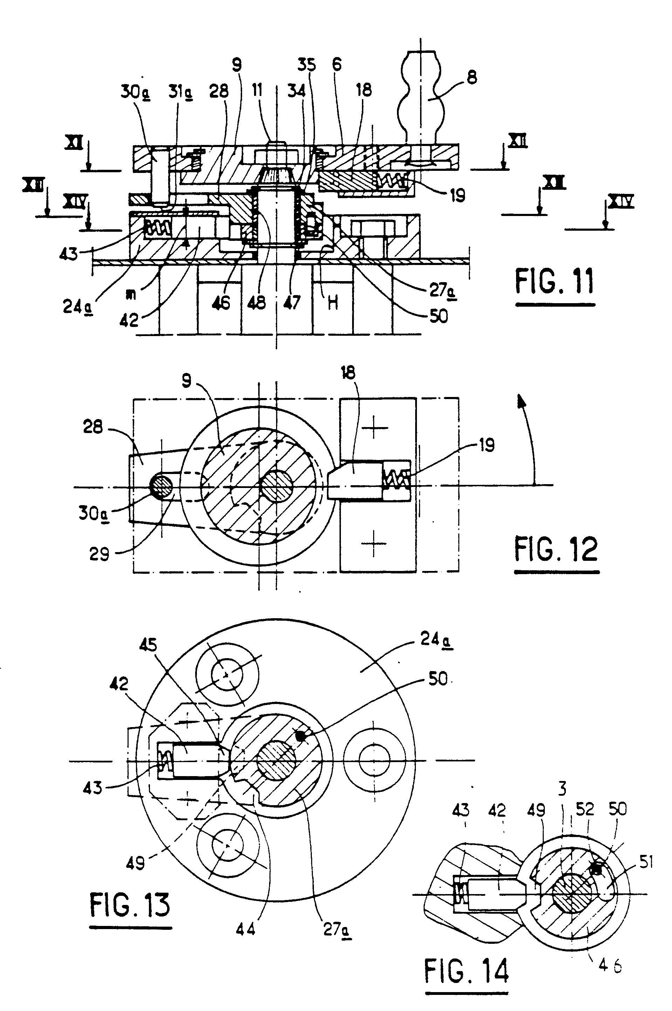

Les figures 11 à 18 illustrent un autre mode de réalisation de l'invention. Les éléments du mécanisme de transmission des figures 11 et suivantes, semblables, ou jouant des rôles analogues à des éléments déjà décrits avec référence aux figures précédentes seront désignés par les mêmes chiffres de référence, éventuellement suivis de la lettre a, sans que leur description soit reprise en détail.

Le manchon 24a dont la longueur axiale est plus faible que dans le cas des figures 2 et 5, porte un doigt 42 orienté sensiblement radialement et poussé élastiquement, par un ressort 43, vers l'intérieur, contre la surface cylindrique de la douille 27a. Cette douille comporte une encoche 44 (figure 13) destinée à recevoir l'extrémité 45 du doigt 42. Les bords transversaux de cette extrémité 45 convergent légèrement du côté opposé au ressort 43;

l'encoche 44 a une forme conjuguée à section en trapèze isocèle dont la grande base est ouverte sur la surface de la douille 27a.

La liaison en rotation de la douille 27a et de la manivelle 6 est assurée par le pion 30a engagé dans la lumière 29. La longueur de ce pion 30a est plus faible que celle du pion 30 des figures 2 et 5. L'extrémité 31a du pion 30a vient affleurer la face de l'extension 28 tournée vers le manchon 24a. Un jeu axial subsiste entre cette extrémité 31a et la face voisine du manchon 24a.

Une bague 46, montée autour de l'arbre 3, est disposée axialement contre la douille 27a, entre cette dernière et le manchon 24a. La douille 27a et la bague 46 sont libres en rotation par rapport à l'arbre 3 et sont maintenues empilées l'une contre l'autre par la bague 34, ancrée dans l'arbre 3, du côté de la manivelle 6, et par une autre bague élastique et fendue 47 ancrée dans une gorge de l'arbre 3, du côté du manchon 24a. Des coussinets anti-friction 48, ou analogues, peuvent être prévus entre, d'une part, l'arbre 3 et, d'autre part, la douille 27a et la bague 46.

La douille 27a et la bague 46 sont liées en rotation avec une possibilité de débattement angulaire. La bague 46 comporte une autre encoche 49 (figure 14) qui peut être alignée (superposée) ou décalée angulairement par rapport à l'encoche 44 de la douille 27a. Le doigt 42 a une épaisseur $m$, suivant la drection de l'arbre 3, suffisante pour coopérer avec les surfaces de la douille 27a et de la bague 46, comme visible sur la figure 11. Pratiquement, le doigt 42 est disposé de manière à coopérer, sensiblement sur la moitié supérieure de son épaisseur (selon la représentation de la figure 11) avec la douille 27a, tandis qu'il coopère, par sa partie inférieure, avec la bague 46.

La liaison en rotation, avec possibilité de débattement angulaire, entre la douille 27a et la bague 46 peut être assurée par un pion 50, ancré dans un logement prévu sur la face de la douille 27a tournée vers la bague 46. Ce pion fait saillie, du côté de la bague 46, par rapport à la douille 27a parallèlement à l'axe de l'arbre 3. Une partie de ce pion 50 est engagée dans, une lumière 51 en forme d'arc de cercle, prevue dans la bague 46.

Lorsque la douille 27a tourne dans le sens normal (sens contraire des aiguilles d'une montre selon la représentation des dessins) le pion 50 vient en butée contre l'extrémité 52 (figure 14) de la lumière 51. La bague 46 est entraînée par la douille 27a en restant dans cette position angulaire relative pour laquelle l'encoche 44 est décalée angulairement par rapport à l'encoche 49 (voir figure 13). Dans l'exemple de réalisation montré, l'encoche 44 est située en avant, selon le sens normal de rotation, par rapport à l'encoche 49. De préférence, le décalage angulaire est choisi de telle sorte qu'aucune partie des encoches 44 et 49 n'est superposée lorsque le pion 50 est en appui contre l'extrémité·52.

Ainsi, lorsque les deux encoches 44, 49 sont décalées, l'extrémité 45 du doigt 42 reste en appui contre la surface de la douille 27a ou de la bague 46, au passage de l'une des encoches. Le doigt 42 ne pénétrant pas dans ces encoches lors de leur passage, il n'en résulte aucun bruit parasite, lors du franchissement de ce doigt 42.

Des moyens de commande (non représentés) sont prévus pour commander l'alignement, c'est-à-dire la superposition, des encoches 44 et 49, lorsque l'arrêt du dispositif d'essuie-glace est commandé. Ces moyens de commande sont agencés de telle sorte que les encoches soient alignées lorsque l'arbre 3 change de sens de rotation. La position au changement de sens de rotation est telle que les encoches 44 et 49, superposées, se trouvent en face du doigt 42 qui rentre dans ces encoches pour bloquer en rotation la douille 27a et la bague 46 par rapport au manchon 24a.

A titre d'exemple, non limitatif, les moyens de commande de l'alignement des deux encoches pourraient être constitues par un ressort de torsion (non représenté) rappelant la bague 46, par rapport à la douille 27a, dans la position d'alignement, le couple exercé par ce ressort de torsion étant inférieur à celui développé par le pion 50 pour entraîner la bague 46 en rotation; lorsque l'arbre 3 s'arrête, la douille 27a n'exerce plus de couple d'entraînement sur la bague 46 et le ressort de torsion peut ramener cette bague 46 dans la position d'alignement des encoches 44, 49.

D'autres moyens de commande pourraient être prévus, notamment au niveau de la commande électrique du moteur d'entraînement de l'arbre 3, pour assurer l'alignement des encoches.

Après l'arrêt de la rotation de l'arbre 3 dans le sens normal, et l'entrée du doigt 42 dans les encoches superposées 44, 49, la rotation de l'arbre 3 en sens inverse est commandée. Cette inversion du sens de rotation peut être obtenue, par exemple, à l'aide d'un contact commandé lorsque le doigt 42 est entré dans les encoches 44, 49, ce contact assurant la mise en rotation en· sens inverse du moteur électrique entraînant l'arbre 3.

Le fonctionnement du mécanisme de transmission des figures 11 à 18 est semblable à celui décrit précédémment:

En fonctionnement normal, l'excentrique 9 est lié en rotation à la manivelle 6, dont la longueur efficace est minimale (configuration de la figure 11) par la plaquette 18 engagée dans l'encoche 17.

Lorsque l'arrêt du dispositif d'essuie-glace est commandé, l'arbre 3 continue à tourner dans le sens normal jusqu'à ce que le balai d'essuie-glace atteigne la position A (figure 1). Puis l'arbre 3 s'arrête, les encoches 44 et 49 sont alignées, comme expliqué précédemment, et le doigt 42 entre dans ces encoches. La douille 27a est alors arrêtée en rotation par rapport au manchon 24a et au bâti 4.

La rotation de l'arbre 3 en sens inverse est alors commandée, généralement par inversion du sens de rotation du moteur entraînant cet arbre.

La douille 27a n'est pas entraînée dans ce mouvement de rotation; la manivelle 6, liée à la douille 27a par le pion 30a, qui coopère avec la lumière 29, est elle-même arrêtée en rotation par rapport au bâti 4.

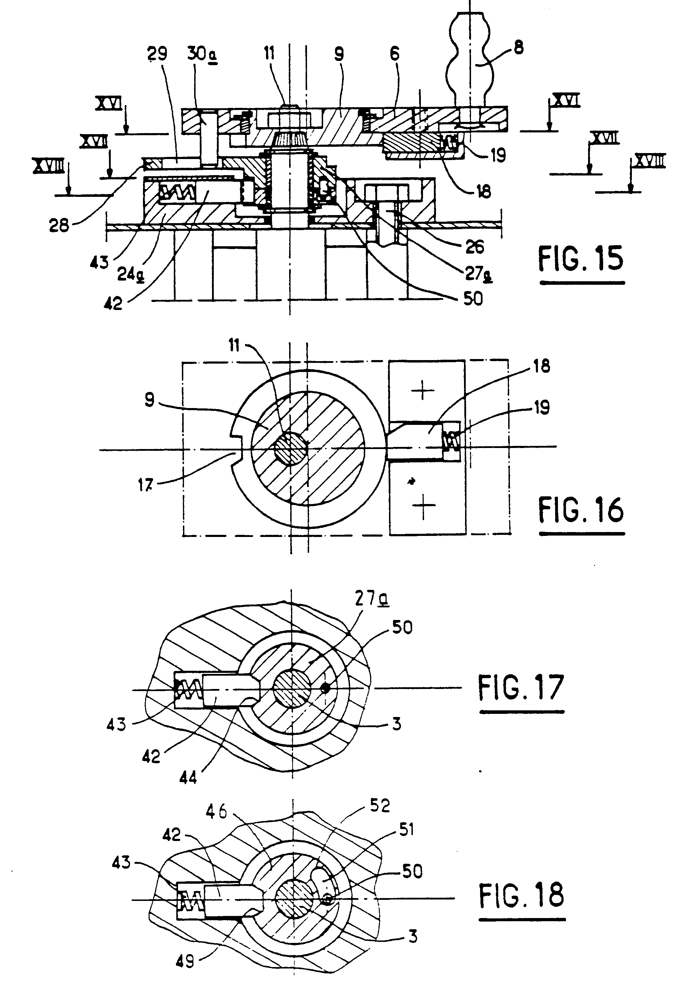

L'excentrique 9 va donc tourner seul dans le sens opposé (sens des aiguilles d'une montre) en faisant sortir la plaquette 18 de l'encoche 17. L'arrêt de la rotation de l'arbre 3 dans le sens inverse est commandé lorsque cet arbre 3 a tourne de 180° par rapport à la position de départ, comme représenté sur la figure 16.

La manivelle 6 s'est déplacée en translation d'une distance 2e, ar rapport au bâti 4. La configuration du mecanisme est alors celle de la figure 15, qui correspond à une longueur efficace maximale de la manivelle 6. L'augmentation de la longueur de la manivelle 6 s'est accompagnée du passage du bras 1 de la position A de la figure 1 à la position de "parcage" P.

Lorsque le bras 1 arrive dans cette position P l'arrêt complet du moteur et de l'arbre 3 est commandé.

Les figures 17 et 18 illustrent les positions respectives de la d uille 27a et de la bague 46, lorsque le bras 1 est en position de "parcage". Comme visible sur la figure 18, le pion 50 se trouve contre l'extrémité de la lumière 51 opposée à l'extrémité 52.

Lorsque l'utilisateur commande un nouveau fonctionnement du dispositif d'essuie-glace, l'arbre 3 est entraîné, dès le début, dan son sens normal de rotation (sens contraire des aiguilles d'une montre selon la représentation des dessins). L'excentrique 9 tourne d'un demi-tour par rapport à la manivelle 6 qui reprend sa longueur efficace minimale, de sorte que le bras 1 retourne à la position A de la figure 1.

A la fin du demi-tour de l'excentrique 9, la plaquette 18 entre dans l'encoche 17 et la manivelle 6 est entraînée en rotation par l'excentrique 9.

Le ion 30a entraîne lui-même en rotation la douille 27a; l'action des bords inclinés de l'encoche 44 provoque la sortie du doigt 42 de ladite encoche. La bague 46, notamment en raison de son inertie, est en retard par rapport à la rotation de la bague 27a et le pion 50 va se déplacer dans la lumière 51 jusqu'à venir en butée contre l'extrémité 52. A partir de ce moment, la bague 46 est entraînée positivement en rotation par la douille 27a, les encoches 44 et 49 n'étant plus alignées.

Les mécanismes de transmission conformes à l'invention sont d'une construction simple et robuste; leur fonctionnement est particulièremet doux, sûr et précis. Les exemples de réalisation décrits ont en outre un fonctionnement silencieux.

De tels mécanismes de transmission conviennent particulièrement pour les dispositifs d'essuie-glace, mais peuvent être utilisés dans tous les cas où l'on souhaite avoir une position d'arrêt d'un dispositif entraîné par le mécanisme située au delà d'une des positions extrêmes d'une oscillation alternative.

Il est clair que l'invention n'est pas limitée aux exemples de réalisation décrits et que de nombreuses variantes possibles entrent dans le champ de protection:

Par exemple, dans le cas de la réalisation de la figure 11 et suivantes, les moyens pour assurer l'alignement dès encoches 44 et 49 pourraient comprendre des moyens commandant l'arrêt de l'arbre 3 dans le sens normal de rotation lorsque l'encoche 49 arrive au droit de l'extrémité 45 du doigt 42, la bague 46 étant montée libre en rotation autour de l'arbre 3. Au début du mouvement de l'arbre 3 en sens inverse, la bague 46 ne sera plus entraînée par le pion 50 qui va se déplacer dans la lumière 51. L'encoche 44 va donc s'aligner avec l'encoche 49 et le doigt 42 pénètrera dans ces deux encoches; lorsque l'alignement est réalisé, le doigt 50 arrive en appui contre l'autre extrémité de la lumière 51, et l'arbre 3 poursuit son mouvement en sens inverse tandis que la douille 27a est arrêtée en rotation par rapport au bâti 4.

Lorsque, comme dans l'exemple de réalisation des figures 2 à 10, les moyens de blocage en rotation de la manivelle 6, par rapport au bâti 4, comprennent, au moins pour assurer le blocage de la manivelle 6 au début du mouvement normal de rotation, un dispositif à pion 30, propre à coopérer avec un logement 41, ou analogue, orienté radialement l'un des éléments (logement 41 ou pion 30) étant fixé en rotation par rapport au bâti 4, tandis que l'autre élément (pion 30 ou logement 41) est solidaire de la manivelle 6, ces deux éléments étant dégagés l'un de l'autre en fonctionnement normal du mécanisme, on peut envisager les variantes suivantes:

- les moyens pour assurer le blocage de la manivelle 6 par rapport au bâti 4 lorsque l'arbre 3 tourne en sens inverse du sens normal, peuvent être constitués par un doigt orienté radialement et poussé élastiquement vers l'intérieur, ce doigt étant monté dans un logement prévu dans une pièce solidaire de la manivelle et située du côté du bâti; l'extrémité de ce doigt poussée radialement vers l'intérieur appuie contre une piste cylindrique prévue sur un manchon solidaire du bâti, cette piste comportant une encoche qui peut être franchie sans blocage par le doigt pour le sens normal de rotation de l'arbre 3, et dans laquelle le doigt est bloqué lorsque l'arbre 3 tourne en sens inverse du sens normal;

- selon une autre possibilité, le logement 41 (figure 2) destiné à recevoir l'extrémité du pion 30 est prévu sous la manivelle 6, du côté du bâti 4 et forme une sorte de rainure radiale tandis que le pion est lié en rotation au bâti, ce pion pouvant être déplacé parallèlement à l'axe de l'arbre 3, notamment par l'action d'un électro-aimant; dans ce cas, la sortie du pion est commandée lorsque l'arbre 3 tourne en sens inverse du sens normal et au début de la mise en rotation de l'arbre 3 dans le sens normal de sorte que la coopération du pion et de la rainure bloque la manivelle par rapport au bâti; par contre, pour la poursuite du mouvement de l'arbre 3 dans le sens normal de rotation, le pion est effacé, dans la direction axiale, par rapport à la manivelle 6 qui est ainsi libre de tourner par rapport au bâti 4.

## Revendications

1. Mécanisme de transmission, notamment pour essuie-glace, entre un arbre rotatif d'entraînement (3), fixe par rapport à un bâti (4), et une bielle (5), ou analogue, pour la commande d'un mouvement d'oscillation alternative, le sens de rotation de l'arbre rotatif (3) pouvant être inversé, ce mécanisme de transmission comprenant:

- une manivelle (6) de longueur efficace (L) variable, cette longueur (L) ayant une première valeur, en fonctionnement normal, pour un sens de rotation donné de l'arbre, tandis qu'une augmentation de la longueur efficace de la manivelle est commandée, lors d'un arrêt de fonctionnement, par une inversion du sens de rotation de l'arbre (3);
- un excentrique (9), calé en rotation sur l'arbre d'entraînement (3), ledit excentrique étant monté dans un alésage (13) prévu dans la manivelle (6);
- des moyens de blocage en rotation (V) entre l'excentrique (9) et la manivelle (6), prévus à la périphérie de l'excentrique, pour assurer une liaison en rotation entre l'excentrique et la manivelle dans le sens de rotation normal de l'arbre, et pour libérer en rotation l'excentrique par rapport à la manivelle dans le sens opposé de rotation de l'arbre;
- et des moyens (D) pour bloquer en rotation la manivelle (6) par rapport au bâti (4) lorsque l'arbre (3) tourne en sens inverse du sens normal, ainsi qu'au début de la rotation de l'arbre dans le sens normal, tandis que la manivelle (6) est libre de tourner par rapport au bâti (4) pendant la suite du fonctionnement dans le sens normal,

caractérisé par le fait que les moyens (D) pour bloquer en rotation la manivelle (6) par rapport au bâti (4) comprennent:

- un manchon (24, 24a) ou analogue, fixé sur le bâti (4) et centré sur l'arbre (3), ce manchon comportant un logement central (H);
- au moins une douille (27, 27a) traversée librement en rotation par l'arbre (3) et montée dans le logement central (H) du manchon (24, 24a), cette douille (27, 27a) étant liée en rotation à la manivelle (6), et un mouvement de translation entre la manivelle (6) et la douille (27, 27a) étant autorise,
- et des moyens (37) pour bloquer en rotation la douille (27, 27a) par rapport au manchon (24, 24a) lors de l'inversion du sens de rotation de l'arbre (3), comprenant un dispositif de roue libre (37), ou équivalent (roue à rochets), placée entre le manchon (24) et la douille (27) de telle sorte que, pour le sens normal de rotation, la douille (27) soit libre par rapport au manchon (24), tandis que pour le sens inverse, la roue libre (37) est bloquante et assure une liaison en rotation du manchon (24) et de la douille (27).

2. Mécanisme selon la revendication 1, caractérisé par le fait que la douille (27, 27a) présente une extension radiale (28), à son extrémité voisine de la manivelle (6), cette extension (28) étant située, suivant la direction axiale, entre la manivelle (6) et le manchon (24, 24a), la liaison en rotation de la manivelle (6) et de la douille (27, 27a) étant assurée par un pion (30, 30a), ou analogue, solidaire de la manivelle (6) et orienté sensiblement orthogonalement au plan moyen de cette manivelle (6), ce pion (30, 30a) faisant saillie en direction du manchon et traversant une lumière radiale (29) prévue dans ladite extension (28).

3. Mécanisme selon la revendication 1 ou 2, caractérisé par le fait que les moyens (D) pour bloquer en rotation la douille par rapport au manchon comprennent un doigt (42) orienté sensiblement radialement, porté par le manchon (24a) et poussé élastiquement, radialement vers l'intérieur, contre la surface cylindrique de la douille (27a) qui comporte une encoche (44) destinée à recevoir l'extrémité (45) du doigt (42).

4. Mécanisme selon la revendication 3, caractérisé par le fait qu'une bague (46), montée autour de l'arbre (3), est disposée axialement contre la douille (27a) et est liée à cette dernière avec une possibilité de débattement angulaire, ladite bague (46) comportant une deuxième encoche (49) qui peut être alignée ou décalée angulairement par rapport à celle de la douille, le susdit doigt (42) ayant une épaisseur, suivant la direction de l'arbre, suffisante pour coopérer avec les surfaces de la douille (27a) et de la bague (46) de sorte que le doigt (42) ne puisse arrêter en rotation la douille (27a rapport au manchon (24a) que lorsque les encoches (44, 49), douille (27a) et de la bague (46) sont alignées.

5. Mécanisme selon la revendication 4, caractérisé par le fait que la liaison en rotation, avec possibilité de débattement angulaire, entre la douille (27a) et la bague (46) est assurée par un pion (50) destiné à coopérer avec une lumière (51) ou analogue en forme d'arc de cercle.

6. Dispositif d'essuie-glace, caractérisé par le fait qu'il comprend un mécanisme de transmission selon l'une quelconque des revendications précédentes.

## Patentansprüche

1. Kraftübertragung, insbesondere für Scheibenwischer, zwischen einer rotierenden Antriebswelle (3), die an einem Rahmen (4) befestigt ist, und einer Pleuelstange (5) oder ähnlichen Vorrichtung zur Steuerung einer Hin- und Herbewegung, wobei die Drehrichtung der rotierenden Welle (3) umgekehrt werden kann und diese Kraftübertragung folgendes einschließt:

- Eine Kurbel (6) mit veränderlicher Nutzlänge (L), wobei diese Länge (L) bei normalem Betrieb einen ersten Wert für eine bestimmte Drehrichtung der Welle aufweist, während eine Vergrößerung der Nutzlänge der Kurbel bei Funktionsunterbrechung durch eine Umkehr der Drehrichtung der Welle (3) bewirkt wird;
- einen Exzenter (9), der drehbar auf der Antriebswelle (3) verkeilt ist, wobei der genannte Exzenter in einer Bohrung (13) montiert ist, die in der Kurbel (6) vorgesehen ist;
- Rotationsblockierelemente (V) zwischen Exzenter (9) und Kurbel (6), vorgesehen am Kreisumfang des Exzenters, um eine Drehverbindung zwischen Exzenter und Kurbel in der normalen Drehrichtung der Welle sicherzustellen und um den Exzenter in der Drehbewegung im Verhältnis zur Kurbel in der der Wellenrotation entgegengesetzten Richtung freizugeben;
- sowie Elemente (D), um die Kurbel (6) im Verhältnis zum Rahmen (4) in der Rotation zu blockieren, wenn sich die Welle (3) entgegen der normalen Richtung dreht, sowie zu Beginn der Wellenrotation in normaler Richtung, während die Kurbel (6) sich im Verhältnis zum Rahmen (4) während des weiteren Ablaufs in normaler Richtung frei drehen kann,

dadurch gekennzeichnet, daß die Elemente (D) zum Blockieren der Drehbewegung der Kurbel (6) im Verhältnis zum Rahmen (4) folgendes einschließen:

- eine Muffe (24, 24a) oder ein ähnliches Element, am Rahmen (4) befestigt und an der Welle (3) zentriert, wobei diese Muffe eine zentrale Aufnahme (H) besitzt;
- wenigstens eine Hülse (27, 27a), durch die die Welle (3) in der Rotationsbewegung frei hindurchtritt und die in der zentralen Aufnahme (H) der Muffe (24, 24a) angebracht ist, wobei diese Hülse (27, 27a) drehbar mit der Kurbel (6) verbunden ist, wobei eine Translationsbewegung zwischen Kurbel (6) und Hülse (27, 27a) möglich wird,
- und Elemente (37) zum Blockieren der Rotation der Hülse (27, 27a) im Verhältnis zur Muffe (24, 24a) bei Umkehr der Drehrichtung der Welle (3), unter Einschluß einer Freilaufeinrichtung (37) (oder einer gleichwertigen Vorrichtung (Schaltrad (..)), die zwischen der Muffe (24) und der Hülse (27) so angeordnet ist, daß die Hülse (27) bei normaler Drehrichtung im Verhältnis zur Muffe (24) frei, ist, während der Freilauf (37) bei umgekehrter Drehrichtung blockiert und eine rotierende Verbindung zwischen Muffe (24) und Hülse (27) gewährleistet.

2. Vorrichtung gemäß Anspruch 1, dadurch gekennzeichnet, daß die Hülse (27, 27a) an dem der Kurbel (6) nahegelegenen Ende eine radiale Verlängerung (28) aufweist, wobei diese Verlängerung (28) je nach axialer Richtung zwischen der Kurbel (6) und der Muffe (24, 24a) liegt, während die rotierende Verbindung der Kurbel (6) und der Hülse (27, 27a) durch einen Stift (30, 30a) oder eine ähnliche Vorrichtung gewährleistet ist, der/die fest mit der Kurbel (6) verbunden und im wesentlichen orthogonal zur mittleren Ebene dieser Kurbel (6) ausgerichtet ist, während dieser Stift (30, 30a) in Richtung der Muffe vorspringt und durch eine radiale Öffnung (29) hindurchtritt, die in der genannten Verlängerung (28) vorgesehen ist.

3. Vorrichtung gemäß Anspruch 1 oder 2, dadurch gekennzeichnet, daß die Elemente (D) zur Blockierung der Rotation der Hülse im Verhältnis zur Muffe einen Zapfen (42) einschließen, der im wesentlichen radial ausgerichtet ist und auf der Muffe (24a) aufliegt und auf elastische Weise radial nach innen gegen die zylindrische Oberfläche der Hülse (27a) gedrückt wird, welche einen Einschnitt (44) aufweist, der zur Aufnahme des Endes (45) des Zapfens (42) bestimmt ist.

4. Vorrichtung gemäß Anspruch 3, dadurch gekennzeichnet, daß ein rund um die Welle (3) angebrachter Ring (46) axial gegen die Hülse (27a) angebracht und mit letzterer so verbunden ist, daß die Möglichkeit einer Winkelverschiebung besteht, wobei der genannte Ring (46) einen zweiten Einschnitt (49) aufweist, der winkelig im Verhältnis zur Hülse ausgerichtet oder versetzt angeordnet werden kann, wobei der genannte Zapfen (42) je nach Richtung der Welle eine Dicke aufweist, die ausreicht, um mit den Oberflächen der Hülse (27a) und des Rings (46) zusammenzuwirken, so daß der Zapfen (42) die Rotation der Hülse (27a) im Verhältnis im Verhältnis zur Muffe (24a) nicht unterbrechen kann, außer wenn die Einschnitte (44, 49), der Hülse (27a) und des Rings (46) fluchten.

5. Vorrichtung gemäß Anspruch 4, dadurch gekennzeichnet, daß die rotierende Verbindung zwischen Hülse (27a) und Ring (46) mit der Möglichkeit einer Winkelverschiebung durch einen Stift (50) gewährleistet ist, der dazu bestimmt ist, mit einer Öffnung (51) oder einer ähnlichen Anordnung in Kreisbogenform zusammenzuwirken.

6. Scheibenwischervorrichtung, dadurch gekennzeichnet, daß diese eine Kraftübertragung gemäß einem beliebigen der vorangegangenen Ansprüche enthält.

**Claims**

1. A transmission mechanism, for windscreen wipers in particular, between a rotary drive shaft (3), fixed in relation to a support (4) and a crank arm (5), or similar, for actuating an alternating oscillating motion, it being possible to reverse the direction of rotation of the rotary shaft (3), this transmission mechanism comprising:

- a crank (6) of a variable effective length (L), this length (L) having a first value in normal operation for a given direction of rotation of the shaft, whilst an increase in the effective length of the crank is actuated when the operation is stopped by reversal of the direction of rotation of the shaft (3);

- an eccentric (9), secured for rotation on the drive shaft (3), the said eccentric (9) being mounted in a bore (13) provided in the crank (6);

- means (V) for locking the rotation between the eccentric (9) and the crank (6), provided at the periphery of the eccentric for ensuring a linkage in rotation between the eccentric and the crank in the normal direction of rotation of the shaft and for releasing the eccentric in rotation in relation to the crank in the opposite direction of rotation of the shaft;

- and means (D) for locking the crank (6) for rotation in relation to the support (4) when the shaft (3) turns in the reverse direction to the normal direction, as well as at the start of the rotation of the shaft in the normal direction, whilst the crank (6) is free to turn in relation to the support (4) during the subsequent operation in the normal direction,

characterised in that the means (D) for locking the crank (6) for rotation in relation to the support (4) comprise:

- a sleeve (24, 24a) or similar, fixed to the support (4) and centred on the shaft (3), this sleeve comprising a central recess (H);

- at least one bush (27, 27a) freely traversed in rotation by the shaft (3) and mounted in the central recess (H) of the sleeve (24, 24a), this bush (27, 27a) being linked in rotation to the crank (6), and a translational motion being permitted between the crank (6) and the bush (27, 27a),

- and means (37) for locking the bush (27, 27a) for rotation in relation to the sleeve (24, 24a) when the direction of rotation of the shaft (3) is reversed, said means comprising a tree wheel device (37), or an equivalent one (a ratchet wheel) placed between the sleeve (24) and the bush (27) so that for the normal direction of rotation, the bush (27) should be free in relation to the sleeve (24,) whilst for the reverse direction, the free-wheel (37) produces a locking effect and ensures the linkage in rotation of the sleeve (24) and of the bush (27).

2. A mechanism in accordance with Claim 1, characterised in that the bush (27, 27a) has a radial extension (28) at its end next to the crank (6), this extension (28) being situated along the axial direction between the crank (6) and the sleeve (24, 24a), the linkage in rotation of the crank (6) and of the bush (27, 27a) being ensured by a pin (30, 30a), or similar, fixedly connected to the crank (6) and orientated substantially orthogonal ly to the median plane of this crank (6), this pin (30, 30a) projecting towards the sleeve and passing through a radial hole (29) provided in the said extension (28).

3. A mechanism in accordance with Claim 1 or 2, characterised in that the means (D) for locking the bush for rotation in relation to the sleeve comprise a finger (42) orientated substantially radially, carried by the sleeve (24a) and being pushed elastically radially towards the inside against the cylindrical surface of the bush (27a) which comprises a slot (44) intended to accommodate the end (45) of the finger (42).

4. A mechanism in accordance with Claim 3, chaacterised in that a ring (46), mounted around the shaft (3), is disposed axially against the bush (27a) and is linked to the latter with scope for angular displacement, the said ring (46) comprising a second slot (49) which can be aligned with, or be angulary displaced in relation to that of the bush, the above mentioned finger (42) having a thickness along the direction of the shaft which is sufficient for cooperating with the surfaces of the bush (27a) and of the ring (46), so that the finger (42) can only arrest the rotation of the bush (27a) in relation to the sleeve (24a) when the slots (44, 49) of the bush (27a) and of the ring (46) are aligned.

5. A mechanism in accordance with Claim 4, characterised in that the linkage in rotation with scope for an angular displacement between the bush (27a) and the ring (46) is ensured by a pin (50), intended to cooperate with a circular arc shaped hole (51) or similar.

6. A windscreen wiper device characterised in that it comprises a transmission mechanism in accordance with any one of the preceding claims.

FIG. 1

FIG. 2

1

FIG. 3

FIG. 4

FIG. 5

F₁G.6

FIG. 7

FIG. 8

FIG. 9

FIG. 10

7

FIG. 11

FIG. 12

FIG. 13

FIG. 14

FIG. 15

FIG. 16

FIG. 17

FIG. 18

11